# EUROPEAN PATENT SPECIFICATION

(11) **EP 2 208 337 B1**
(45) Date of publication and mention of the grant of the patent: **13.11.2019**
(21) Application number: 08803109.1
(22) Date of filing: 20.08.2008
(51) Int. Cl.: H04L 29/06, H04M 3/00

(54) **DYNAMIC INITIATION OF I1-PS SIGNALING IN IMS CENTRALIZED SERVICES**
DYNAMISCHE INITIIERUNG DER I1-PS-SIGNALISIERUNG IN ZENTRALISIERTEN IMS-DIENSTEN
DÉCLENCHEMENT DYNAMIQUE DE SIGNALISATION I1-PS DANS DES SERVICES CENTRALISÉS IMS

(30) Priority: 02.10.2007 US 905581
(43) Date of publication of application: 21.07.2010
(73) Proprietor: Nokia Technologies Oy, 02610 Espoo (FI)
(72) Inventor: MUTIKAINEN, Jari, FIN-01830 Lepsämä (FI); MELANDER, Mari Kaisa, FIN-02230 Espoo (FI)
(74) Representative: Seppo Laine Oy
(86) International application number: PCT/EP2008/060879
(87) International publication number: WO 2009/043638

(56) References cited:
- WO-A-99/17579
- US-A1- 2006 171 368
- 3GPP: "3rd Generation Partnership Project;Technical Specification Group Services and System Aspects;IP Multimedia System (IMS) centralized services(Release 8)" 3GPP DRAFT; 23892-121-CLEAN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. tsg_sa\WG2_Arch\TSGS2_60_Kobe\Docs, no. Kobe; 20071008, 24 September 2007 (2007-09-24), XP050260795
- 3GPP SA WG2: "Combining Circuit Switched (CS) and IP Multimedia Subsystem (IMS) services; Stage 2 V7.1.0 (Release 7)" INTERNET CITATION, [Online] XP002398014 Retrieved from the Internet: URL:http://www.3gpp.org/ftp/Specs/html-inf o/23279.htm> [retrieved on 2006-09-07]

## Description

### BACKGROUND OF THE INVENTION:

### Field of the invention:

The invention relates to a method and device for establishing a specific packet switched connection for providing additional services concerning a circuit switched connection.

### Description of the related art:

This case relates to ICS services (IMS Centralized Services, i.e., IP (internet protocol) multimedia services), where currently a I1-ps connection has to be formed at the time a CS (circuit switched) voice call is established regardless of whether the connection will be needed during the call. This will be explained in the following in detail.

IMS centralized services (ICS, 3GPP TR 23.892 V1.2.1, the document being abbreviated as ICS TR in the following) describes a solution which can offer service consistency and service continuity between CS (circuit switched) and PS packet switched (IP-CAN (internet protocol connectivity access network)) accesses. In the ICS all the services are executed in the IMS, regardless of the access a user equipment (UE) uses. The ICS is an interim solution for a transition period when VoIP (voice over internet protocol) is not generally available due to lack of VoIP capable radio accesses (e.g. LTE (long term evolution), HSPA (highspeed packet access)). Certain operators would like to discontinue the investments to the CS network and develop all services in IMS instead, but since the VoIP is not yet possible everywhere, the UE must have other means to access the IMS services while "roaming" in those areas. In those areas, the UE must use CS domain for voice calls, but still at the same time, be able to control the mid-call services residing in IMS.

Such mid-call services are e.g. conferencing, call transfer, call hold and resume, that in GSM (global system for mobile communication) are executed in the CS domain in a VMSC (visited mobile switching center), but in the ICS system, these should be executed in the IMS instead. For this purpose, the ICS TR (3GPP TR 23.892 V1.2.1, as mentioned above) has described two main solutions, I1-cs and I1-ps, that are protocol alternatives what a so-called ICS UE can use to control the IMS services while engaged to a CS call.

An ICS UE is basically a user equipment that is capable of receiving telephony services and other services offered by IMS while the voice bearer is established via CS. An ICS UE can also be a UE which can access IMS via an IP-CAN that supports the full duplex speech component of the IMS multimedia telephony service.

The I1-cs uses USSD (Unstructured Supplementary Service Data) as a transport and I1-ps is based on SIP (session initiation protocol). The I1-cs has some drawbacks compared to the I1-ps. It is not feasible to carry SIP over USSD due to a bandwidth limitation of USSD. For this reason, the I1-cs must be based on a new protocol that can be carried over USSD, and this new protocol needs to be mapped from/to SIP (since the IMS services are SIP based). This means for every new feature, method, RFC, that will be defined for SIP, a conversion to this new protocol needs to be standardized, before the feature can be used in I1-cs. For this reason, the working assumption in 3GPP is that I1-cs needs to be limited to a bare minimum in feature wise, meaning most likely that only a subset of Multimedia Telephony service (TS 24.173 V7.2.0), that is similar to GSM supplementary services, will be supported in I1-cs. Also the aforementioned bandwidth limitation may limit features that I1-cs can support. On the other hand, since the I1-ps is based on SIP, every new SIP RFC is automatically available also for I1-ps. This will make it a lot faster to develop new services on top on I1-ps.

I1-ps has a drawback that it requires either EDGE (enhanced data rates for GSM evolution) DTM (dual transfer mode) or UTRAN (UMTS (universal mobile telecommunications system) terrestrial radio access network) Multi-RAB (radio access bearer) feature in order to run SIP in parallel with a CS call. This limits the I1-ps to areas where these features are supported, and a fallback solution is required elsewhere. Another drawback in the current I1-ps is that it requires that the SIP session that controls the CS call is always initiated for each and every CS call, even if the call would not invoke any supplementary or value added service. This comes from the fact that the caller never knows before hand if the callee invokes some service later on in the call, and it has been thought it would be too complex to initiate the SIP dialog in middle of the CS call (especially in middle of the CS call setup phase), and be able to combine the SIP dialog to the CS call in the end points (UE and ICCF). I1-cs does not suffer on this issue, the same requirement applies also to I1-cs but since it is a new protocol, it can be designed in a way that it fulfils the requirements.

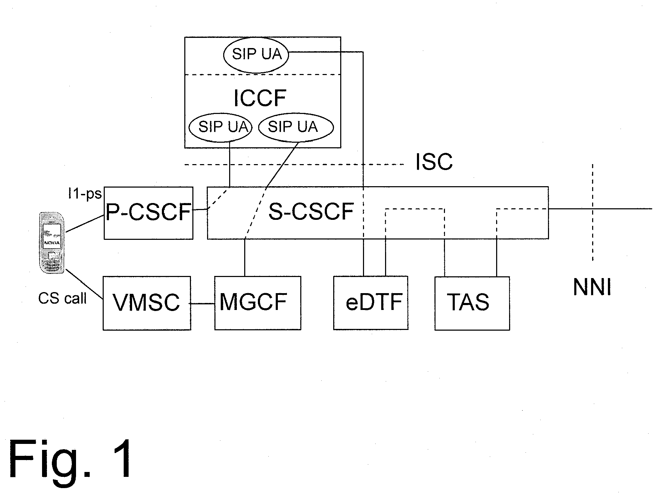

The basic idea of the I1-ps as described in the ICS TR is illustrated in Fig. 1. When the user initiates a voice call, the UE initiates a SIP dialog for I1-ps, a special indicator indicates that this INVITE does not establish a regular PS voice media, but instead refers to a CS call that the UE initiates at the same time over CS network. This special indication may be placed, for example, in an m-line in the in SDP (session description protocol), wherein the m-line gives a media description (media name and transport address). The other end point in the network (ICCF (IMS CS control function) is a B2BUA (back-to-back user agent) that combines the SIP dialog carried over IP-CAN and the SIP dialog from MGCF (media gateway control function), into a one SIP dialog towards the rest of the application servers and network-network interface (NNI), and finally towards the target destination.

Thus, the ICCF makes the UE to look like a regular SIP UA from rest of the IMS point of view, and hides the fact that the UE uses CS network to carry the voice media. All supplementary and value added services for this UE are disabled in the CS network; the UE invokes them from the IMS using I1-ps signalling.

For example, the TAS (telephony application server, as described in the TS 24.173 V7.2.0) provides conferencing, call transfer, etc supplementary services to this UE. From the TAS point of view, the ICCF makes the UE to behave as any IMS SIP UA (user agent). eDTF is the evolved domain transfer function defined in the multimedia session continuity (MMSC, TR 23.893 V0.2.1), that anchors the SIP sessions and provides mains to transfer the session between the CS and IP-CAN. It will be based on DTF functionality in R7 VCC (voice call continuity, TS 24.206 V7.3.0), but enhanced in R8 MMSC to support e.g. multimedia sessions in addition to plain voice media.

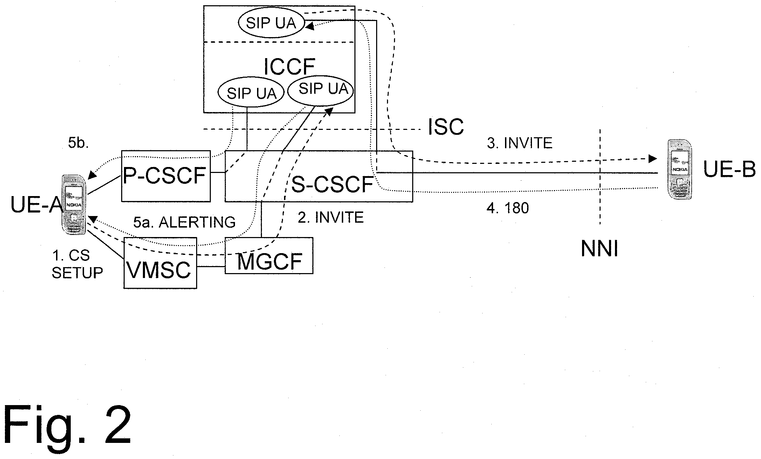

As described before, in the current ICS solution the I1-ps has a limitation that it must be initiated at the same time with the CS voice call. In order to remove the limitation, both ICCF and UE must be able to initiate a voice call using only the CS bearer via MGCF, and initiate a SIP dialog for I1-ps later, at any point of time during the CS call. In the following, a service example is described by referring to Fig. 2, where A calls B, and B wants to attach a ringing tone to the alerting message, so that A can hear a special ringing tone while B's phone is ringing. For simplicity, Fig. 2 does not show the I-CSCF, TAS, eDTF, or the gsmSCF (GSM service control function) required for CAMEL (customised applications for mobile networks enhanced logic) homing that is used to route the outgoing CS calls to the home IMS.

In Fig. 2, the UE-A sends a CS SETUP message to VMSC (visited mobile switching center), which sends ISUP (ISDN (integrated services digital network) user part) IAM (initial address message) to the MGCF, which sends SIP INVITE to the S-CSCF, which sends the SIP INVITE to ICCF. Now the ICCF needs to know whether to wait for INVITE for I1-ps, or generate the INVITE towards the NNI immediately. This is solved in the ICS TR for I1-cs already, but also the I1-ps can use the same solution; the UE can use the destination number in the CS SETUP to indicate to the ICCF whether the I1-ps follows or not. If the destination number is a dedicated E.164 reserved for ICCF, it needs to wait the I1-ps which carries the real B party address in the R-URI (remote uniform resource identifier) of the INVITE. In this example the UE-A does not invoke any service at this point, thus the ICCF generates an INVITE towards the B party.

Now let's assume that the UE-B is a regular SIP UA, and it attaches a ringing tone to the ringing response. The ringing tone is carried in Call-Alert header in 180 Ringing response as described in RFC 3261. The ringing tone may be a reference to a file in some external server or in UE-B, or the response may carry the file itself in the body. Now the ICCF may receive a 183 response with Call-Alert header and ICCF must understand that the MGCF cannot carry the Call-Alert information, thus the ICCF should initiate I1-ps towards the UE-A and carry the header via that channel. The problem is that the according to the RFC 3261, Call-Alert header is only applicable to 180 response, it cannot be carried e.g. in INVITE. On the other hand, in order to initiate the I1-ps, the ICCF should send an initial request (such than INVITE) to the UE-A. The problem is how to carry the SIP information (Call-Alert in this example) to the UE-A.

Other service examples that invoke the I1-ps in middle of the CS call:
1.) UE-B sends a display name in the 200 OK for INVITE as described in RFC 3261, and this needs to be passed to the UE-A.
2.) Call Waiting: UA-B is busy with another session when it receives an incoming session from UE-A, and it responds with 182 Queued, and this needs to be passed to UE-A.
3.) Either UE-A or UE-B puts the call on hold and needs to send Re-INVITE or UPDATE.
4.) Call Deflection: UE-B forwards the session to a new destination by sending 302 response, this response must be carried over I1-ps to UE-A.
Hence, according to the prior art, the above services can not be used, since the services cannot be invoked during a circuit switched call.
Document US2006/171368 discloses a method to control packet data communications using a voice channel, wherein a voice call is initiated and a packet connection triggered using in-band techniques. Document TR23.893 v.1.2.1 (3GPP) discloses methods relating to IMS centralized services, wherein e.g. a circuit-switched voice bearers are established using an I1-ps connection. Document TS23.279 v.7.1.0 (3GPP) discloses an IMS services Stage-2 specification, where e.g. an IMS session may be added to an ongoing circuit-switched call.

### SUMMARY OF THE INVENTION:

The invention is defined in the appended claims.

According to several embodiments of the invention, a network control node is provided which comprises a sender and a receiver configured to perform a circuit switched session, wherein the sender and the receiver are configured to also send and receive session control messages according to a session control protocol, and a controller configured to
receive, from a user equipment, a specific session control message, wherein the session control message includes information for establishing a specific packet switched connection configured to supporting a specific packet services to a network node, wherein the information is encoded in a format suitable for the session control protocol, wherein the controller (1) is further configured to obtain the information from the specific session control message, and to establish the specific packet switched connection to the network node based on the obtained information, wherein the network control node is configured to use the specific packet switched connection for providing services concerning the circuit switched session, the specific session control message is received during the circuit switched session, and the controller is configured to bind the specific packet switched connection with the circuit switched session by using a session.

According to several embodiments of the invention, a method is provided for establishing a packet switched connection, comprising performing, by a network control node, a circuit switched session and sending and receiving session control messages according to a session control protocol, and receiving, by the network control node, from a user equipment, a specific session control message, wherein the session control message includes information for establishing a specific packet switched connection configured to supporting a specific packet services to a network node, and wherein the information is encoded in a format suitable for the session control protocol, obtaining, by the network control node, the information from the specific session control message, and establishing, by the network control node, the specific packet switched connection to the network node based on the obtained information, wherein the specific packet switched connection is used for providing services concerning the circuit switched session, the specific session control message is received during the circuit switched session, and the method comprises binding, by a controller, the specific packet switched connection with the established circuit switched session by using a session identifier.
Thus, according to several embodiments of the invention, a possibility to use, for example, ICS services during a circuit switched call is provided. Further, a circuit switched session call control state may follow events of the packet switched connection.

### BRIEF DESCRIPTION OF THE DRAWINGS:

The invention is described by referring to the enclosed drawings, in which:
Fig. 1 shows block diagram for illustrating I1-ps,
Fig. 2 shows signal flow during a call setup,
Fig. 3A shows a device according to embodiments, and Fig. 3B shows a method according to embodiments, and
Fig. 4 shows a signalling flow according to a first embodiment.

### DETAILED DESCRIPTION OF THE INVENTION:

In the following, preferred embodiments of the present invention is described by referring to the attached drawings.

In particular, in two embodiments ways to dynamically form the I1-ps connection as needed are defined, so that superfluous connections are not needed. That is, according to the embodiments, no unnecessary connections and related signaling are required.

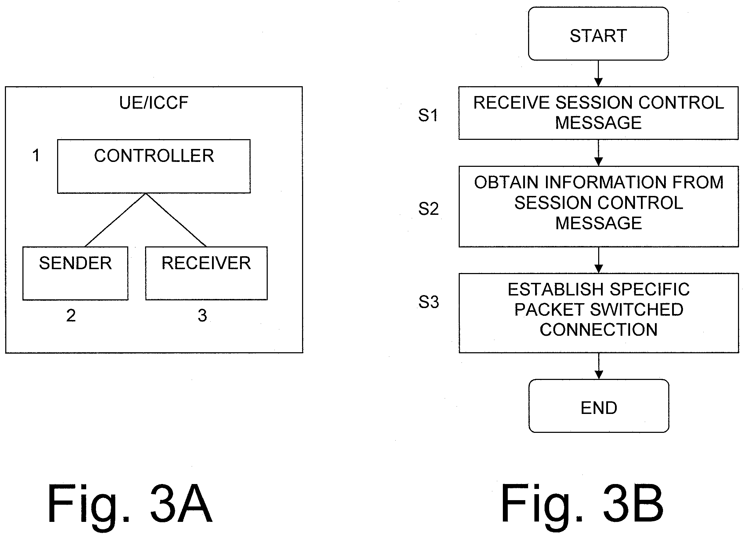

In the following, a basic outline of the embodiments is described by referring to Figs. 3A and 3B, of which Fig. 3A illustrates a device for carrying out the procedures according to the embodiments, and Fig. 3B shows a method according to the embodiments.

The device shown in Fig. 3A comprises a controller 1, a sender 2 and a receiver 3. The sender and the receiver are capable of performing a circuit switched session (e.g., a CS call). The sender and the receiver are capable to also send and receive session control messages according to a session control protocol (e.g., session initiation protocol. The sender and receiver may be combined in one unit. The controller may receive a specific session control message, wherein the session control message includes information for establishing a specific packet switched connection capable of supporting specific packet services to a network node, wherein the information is encoded in a format suitable for the session control protocol. The controller obtains the information from the specific session control message, and establishes the specific packet switched connection based on the obtained information.

Fig. 3B shows a corresponding method. In step S1, a the specific session control message is received. In step S2, the information from the specific session control message is obtained, and in step S3 the specific packet switching connection is established based on the obtained information.

An example of the session control protocol is a session initiation protocol (SIP), and an example for the format suitable for the session control protocol is a message/sipfrag type.

It is noted the method can be carried out by a network control node configured to provide packet switched services for sessions originated or terminated over circuit switched access networks, e.g., by an ICCF. That is, the device shown in Fig. 3A may be the network control node.

The controller 1 may include a processor and different kinds of memory units such as RAM, ROM, or the like. A computer program may be stored in the memory and may comprise software code portions for carrying out the method according to the embodiments. This computer program may be stored on a recording medium such as a CD ROM, for example, and may be directly loadable into the work memory of the controller. Alternatively, the computer program may be loaded via a network into the memory of the controller.

In the following, a first embodiment is described. According to the first embodiment, the specific session control message is an invitation message (e.g., INVITE in SIP). That is, a regular INVITE dialog is established to carry the message/sipfrag content. If a provisional or final response needs to be carried over I1-ps, the ICCF/UE initiates a SIP dialog by sending INVITE with the response in the body that is to be carried over I1-ps. The recipient accepts the INVITE immediately by sending 200 OK. After this point, if another response to the original INVITE needs to be send over I1-ps, it is sent in a body of MESSAGE or INFO method. Once the 200 OK has been received for the original INVITE, the subsequent requests and responses can be sent directly over the I1-ps, without a sipfrag body. If the first message to be sent over I1-ps is a final response to the original INVITE (e.g. 302), the response can be sent in a body of INVITE, but the session is immediately released by sending BYE after 200 OK for INVITE has been received.

Since according to the first embodiment, the I1-ps can be initiated dynamically, the end node (UE/ICCF) should be able to learn when the I1-ps has been established between this end node and its counter part (UE/ICCF) so that the call control state machine should begin to follow the events in the I1-ps and not the CS call control. According to this embodiment, the I1-ps is established between the UE and ICCF when there is a first message is to be sent over it. The other end node acknowledges the reception of the INVITE by sending 200 OK, which is acknowledged by the node by ACK. From this point, the I1-ps has been established between the UE and ICCF, and they are aware of its existence. The call control state machine follows still the CS state machine. Only when the CS CONNECT for CS call has been received, the call control state machine moves to follow the events in the I1-ps channel.

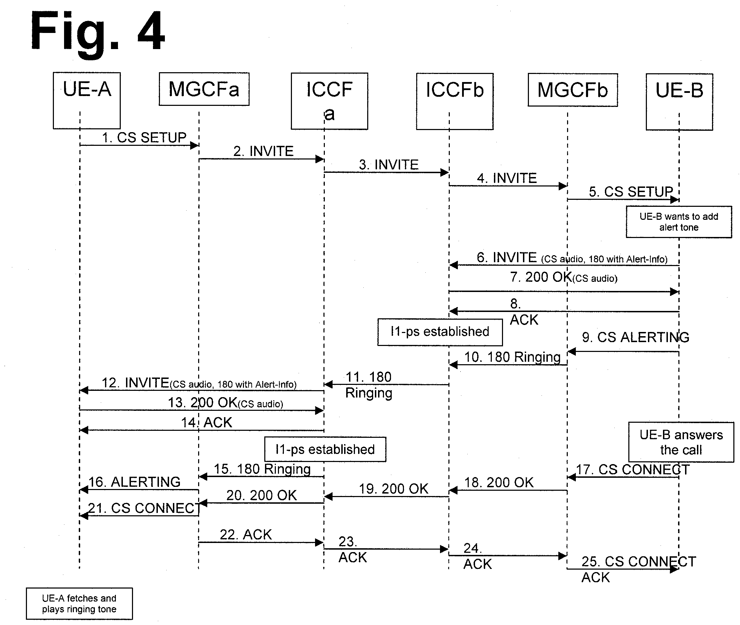

Fig. 4 presents a call flow for a scenario where both UE-A and UE-B are ICS UEs and behind a CS access, and using I1-ps as defined according to the first embodiment. User B wants to send a ringing tone in alerting phase. At first, in messages 1-5, the UE-A establishes a regular voice call to UE-B. There is no need to establish I1-ps at this point, since the UE-A did not require any value added service that would require pass extra information between UE-A and UE-B. The voice call is routed through the ICCF-a and ICCF-b, that serve the UE-A and UE-B, respectively. Once the UE-B receives the CS SETUP, it begins to alert the user B. At the same time the UE-B has determined that it must initiate I1-ps in order to send the additional ringing tone towards UE-A. For this purpose UE-B sends an INVITE with a 180 Ringing with Alert-Info in the body, encoded as message/sipfrag content type. UE-B must initiate I1-ps at first and sent the 180 Ringing over it, wait for 200 OK for INVITE, before sending the CS ALERTING message. When ICCF-b receives the INVITE for I1-ps, it stores the content in the body (here 180 Ringing) and sends 200 OK for INVITE to the UE-B. Due to a reception of I1-ps and the 180 Ringing over it, the ICCF-b understands to wait for the 180 Ringing from the MGCF. Once it receives that, it combines a single 180 Ringing towards the UE-A which carries also the original Alert-Info header. Since it this example the UE-A is an ICS UE using CS access, the ICCF-a receives the 180 Ringing. ICCF-a interprets the content of the message, and determines that in order to send all information in the 180 Ringing to the UE-A, it must initiate a I1-ps channel. For that purpose, it sends INVITE to the UE-A that carries the 180 Ringing with the Alert-Info header. The ICCF-a may generate the 180 Ringing towards the MGCF at the same time while the I1-ps establishment is still ongoing. The UE-A may receive the INVITE for I1-ps and CS ALERTING in whichever order. If it receives the INVITE at first, it stores the content of the body (here 180 Ringing), and acknowledges the INVITE with 200 OK. When it receives the CS ALERTING it renders the content of the Alert-Info in the 180 Ringing to the UI and begins to play alert tone to user A. If it receives the CS ALERTING at first, it begins to alert the user A with a regular alert tone, and may start to render the content of Alert-Info to the UI when it receives the INVITE. This means the alert tone what is heard by the user A may change during the alerting phase. It is also possible that the ICCF-a waits for the establishment of the I1-ps before it sends the 180 Ringing to the MGCF, in this way the Alert-Info never arrives to the UE-A after the UE-A has changed the call control state to alerting phase . In this model described here the call control state model follows the CS call control until the CS CONNECT has been received, after what point it begins to follow the I1-ps events.

The ICS TR describes a mechanism how the ICCF can bind the SIP dialogs it receives from UE and MGCF together. The same solution can be used here, the ICCF authenticates the SIP dialog from MGCF using MSISDN (mobile station integrated service digital network) that is carried via ISUP and/or CAMEL, and bind to the IMS subscription an a Tel URI. The ICS TR also discusses sharing the same Tel URI between multiple devices.

The ICCF and UE should be able to bind the I1-ps messages to a corresponding CS call. This can be achieved with the mechanism described in the ICS TR - the second voice call that is initiated over CS should initiate an I1-ps signalling and this signalling carries a session identifier that refers to the SIP dialog towards the other end. According to the present embodiment, the session identifier can be a Call-ID header that the ICCF generates when it initiates a session towards the UE, and vice versa. This Call-ID is carried over the I1-ps in INVITE in a body of NOTIFY between UE and ICCF. For UE initiated sessions, the ICCF binds this Call-ID to the Call-ID it sends out towards the target destination. For ICCF initiated sessions the UE binds this Call-ID to the session it uses in the upper session control layers and UI.

In the following, a second embodiment is described in more detail. According to the second embodiment, the specific session control message is a notification message (e.g., NOTIFY in SIP).

In particular, according to the second embodiment, a subscription similar to "refer" event package (RFC 3515) is used to carry the received SIP messages using message/sipfrag MIME (multipurpose internet mail extensions) content type (RFC 3420) in the body of NOTIFY. This mechanism was originally described for REFER method (RFC 3515) where it is used to report the progress of the referred dialog to the refer sender. According to the present embodiment, a new event package similar to "refer" and message/sipfrag content type are used to carry the SIP messages from ICCF to UE, in the body of NOTIFY. Both ICCF and UE subscribe each others for the new event package immediately after the IMS registration. The ICCF sends all SIP messages to the UE over I1-ps (via P-CSCF (proxy call station control function) and S-CSCF (serving call station control function) it receives from the NNI. The UE sends all SIP messages to the ICCF over I1-ps (via P-CSCF and S-CSCF), which it would send in a regular SIP dialog to the P-CSCF using regular SIP over Gm.

The RFC 3515 limits the usage of the "refer" event package to the REFER method, it is implicitly subscribed when the REFER is received, and it is not allowed to explicitly subscribe to the "refer" event package. For this reason, a new event package is defined that does not have this limitation.

Another variation is to extend the dialog event package (RFC 4235) to be able to carry also other headers than from/to tags and call-id.

In this solution the I1-ps is based on NOTIFY method. Thus instead of sending INVITE over I1-ps, the UE/ICCF sends a NOTIFY with the INVITE in the body. The current I1-ps as described in the ICS TR assumes that the INVITE carries a special indication in an m-line of the SDP that indicates that a voice media is initiated over a CS call. According to the present embodiment, the same mechanism is used since the SDP needs to have an m-line when the call is put on hold.

Bindings between the CS calls and SIP dialogs can be done as described according to the first embodiment.

Thus, according to the first embodiment, both network nodes involved (UE and ICCF) subscribe to the event package, and only in case SIP procedures are necessary, a notification message (e.g., NOTIFY) is sent. That is, the I1-ps connection is only established in case it is needed.

In the following, the two embodiments described above are compared.

The benefit according to the first embodiment compared to the second embodiment is that after the SIP dialog has been confirmed with 200 OK for INVITE, and CS CONNECT has been received, the protocol is equal to the regular SIP in Gm reference point. This means that if the network level mobility procedures are in place (e.g. MIP (mobile internet protocol)), it is easier to swap between SIP over I1-ps and SIP over Gm, since they are identical. Typically the UE does not need to send any SIP messages in this case, but in case of I1-ps the UE needs to send a Re-INVITE to change the bearer from CS to PS or vice versa, over which the voice media is carried.

According to the second embodiment, in such situation the UE swaps from NOTIFY based I1-ps to SIP over Gm, and vice versa. This means the UE drops (or adds) the tunnelling layer (sipfrags in a body of NOTIFY), and (un)subscribes to the new event package. Above this tunnelling layer, according to the second embodiment the SIP information is identical to the regular SIP over Gm, except there is no real SIP dialog for INVITE established, since the dialog in this level could be started e.g. due to reception of provisional response.

It is also possible to combine parts according to the first embodiment and the second embodiment. For example, NOTIFY may be used between UE-A and ICCF-a, and INVITE based I1-ps may be used between UE-B and ICCF-b.

The invention is not limited to the embodiments described above, and various modifications are possible.

For example, method steps likely to be implemented as software code portions and being run using a processor at the network element, are software code independent and can be specified using any known or future developed programming language as long as the functionality defined by the method steps is preserved. Generally, any method step is suitable to be implemented as software or by hardware without changing the idea of the present invention in terms of the functionality implemented.

Method steps and/or devices, units or means likely to be implemented as hardware components at a user equipment or base station, or any module(s) thereof, are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components.

Devices, units or means (e.g. user equipment and a network control node such as an ICCF) can be implemented as individual devices, units or means, but this does not exclude that they are implemented in a distributed fashion throughout the system, as long as the functionality of the device, unit or means is preserved.

## Claims

1. A network control node comprising a sender (2) and a receiver (3) configured to perform a circuit switched session, wherein the sender (1) and the receiver (3) are configured to also send and receive session control messages according to a session control protocol, and a controller (1) configured to:
receive, from a user equipment, a specific session control message, wherein the session control message includes information for establishing a specific packet switched connection configured to supporting a specific packet services to a network node, wherein the information is encoded in a format suitable for the session control protocol, wherein the controller (1) is further configured to obtain the information from the specific session control message, and to establish the specific packet switched connection to the network node based on the obtained information,
**characterized in that**
the network control node is configured to use the specific packet switched connection for providing services concerning the circuit switched session, the specific session control message is received during the circuit switched session, and the controller (1) is configured to bind the specific packet switched connection with the circuit switched session by using a circuit switched session identifier.

2. The network control node according to claim 1, wherein the session control protocol is a session initiation protocol, SIP.

3. The network control node according to claim 1, wherein the format suitable for the session control protocol is a message/sipfrag type.

4. The network control node according to claim 1, wherein the controller (1) is configured to receive the session control message embedded in a message of another type.

5. The network control node according to claim 1, wherein the specific session control message is an invitation message.

6. The network control node according to claim 1, wherein the specific session control message is a notification message.

7. The network control node according to claim 6, wherein the controller (1) is configured to subscribe to the notification message.

8. A method for establishing a packet switched connection, comprising:
performing, by a network control node, a circuit switched session and sending and receiving (S1) session control messages according to a session control protocol, and
receiving, by the network control node, from a user equipment, a specific session control message, wherein the session control message includes information for establishing a specific packet switched connection configured to supporting a specific packet services to a network node, and wherein the information is encoded in a format suitable for the session control protocol,
obtaining (S2), by the network control node, the information from the specific session control message, and
establishing (S3), by the network control node, the specific packet switched connection to the network node based on the obtained information,
**characterized in that**
the specific packet switched connection is used for providing services concerning the circuit switched session, the specific session control message is received during the circuit switched session, and the method comprises binding, by a controller of the network control node, the specific packet switched connection with the circuit switched session by using a circuit switched session identifier.

9. The method according to claim 8, wherein the session control protocol is a session initiation protocol, SIP.

10. The method according to claim 8, wherein the format suitable for the session control protocol is a message/sipfrag type.

11. The method according to claim 8, further comprising receiving the session control message embedded in a message of another type.

12. The method according to claim 8, wherein the specific session control message is an invitation message.

13. A computer program comprising software code which, cause a computer to carry out a method according to any of claims 8-12, when the computer program is run on the computer.

## Patentansprüche

1. Netzsteuerknoten mit einem Sender (2) und einem Empfänger (3), die dazu konfiguriert sind, eine leitungsvermittelte Sitzung durchzuführen, wobei der Sender (1) und der Empfänger (3) dazu konfiguriert sind, auch Sitzungssteuermeldungen gemäß einem Sitzungssteuerprotokoll zu senden und zu empfangen, und einer Steuereinheit (1), die dazu konfiguriert ist:
von einem Anwendergerät eine spezielle Sitzungssteuermeldung zu empfangen, wobei die Sitzungssteuermeldung Informationen zum Aufbauen einer speziellen paketvermittelten Verbindung, die dazu konfiguriert ist, spezielle Paketdienste zu unterstützen, mit einem Netzknoten umfasst, wobei die Informationen in einem Format codiert sind, das für das Sitzungssteuerprotokoll geeignet ist, wobei die Steuereinheit (1) ferner dazu konfiguriert ist, die Informationen von der speziellen Sitzungssteuermeldung zu erhalten, und die spezielle paketvermittelte Verbindung mit dem Netzknoten auf der Basis der erhaltenen Informationen aufzubauen,
**dadurch gekennzeichnet, dass**
der Netzsteuerknoten dazu konfiguriert ist, die spezielle paketvermittelte Verbindung zum Schaffen von Diensten hinsichtlich der leitungsvermittelten Sitzung zu verwenden, die spezielle Sitzungssteuermeldung während der leitungsvermittelten Sitzung empfangen wird und die Steuereinheit (1) dazu konfiguriert ist, die spezielle paketvermittelte Verbindung an die leitungsvermittelte Sitzung unter Verwendung eines Identifizierers der leitungsvermittelten Sitzung zu binden.

2. Netzsteuerknoten nach Anspruch 1, wobei das Sitzungssteuerprotokoll ein Sitzungseinleitungsprotokoll, SIP, ist.

3. Netzsteuerknoten nach Anspruch 1, wobei das für das Sitzungssteuerprotokoll geeignete Format ein Meldungs/Sipfrag-Typ ist.

4. Netzsteuerknoten nach Anspruch 1, wobei die Steuereinheit (1) dazu konfiguriert ist, die Sitzungssteuermeldung eingebettet in eine Meldung eines anderen Typs zu empfangen.

5. Netzsteuerknoten nach Anspruch 1, wobei die spezielle Sitzungssteuermeldung eine Einladungsmeldung ist.

6. Netzsteuerknoten nach Anspruch 1, wobei die spezielle Sitzungssteuermeldung eine Benachrichtigungsmeldung ist.

7. Netzsteuerknoten nach Anspruch 6, wobei die Steuereinheit (1) dazu konfiguriert ist, sich der Benachrichtigungsmeldung anzuschließen.

8. Verfahren zum Aufbauen einer paketvermittelten Verbindung, das Folgendes umfasst:
Durchführen einer leitungsvermittelten Sitzung und Senden und Empfangen (S1) von Sitzungssteuermeldungen gemäß einem Sitzungssteuerprotokoll durch einen Netzsteuerknoten, und
Empfangen einer speziellen Sitzungssteuermeldung durch den Netzsteuerknoten von einem Anwendergerät, wobei die Sitzungssteuermeldung Informationen zum Aufbauen einer speziellen paketvermittelten Verbindung, die dazu konfiguriert ist, spezielle Paketdienste zu unterstützen, mit einem Netzknoten umfasst und wobei die Informationen in einem für das Sitzungssteuerprotokoll geeigneten Format codiert sind,
Erhalten (S2) der Informationen von der speziellen Sitzungssteuermeldung durch den Netzsteuerknoten und
Aufbauen (S3) der speziellen paketvermittelten Verbindung mit dem Netzknoten auf der Basis der erhaltenen Informationen durch den Netzsteuerknoten,
**dadurch gekennzeichnet, dass**
die spezielle paketvermittelte Verbindung zum Schaffen von Diensten hinsichtlich der leitungsvermittelten Sitzung verwendet wird, die spezielle Sitzungssteuermeldung während der leitungsvermittelten Sitzung empfangen wird und das Verfahren das Binden der speziellen paketvermittelten Verbindung an die leitungsvermittelte Sitzung unter Verwendung eines Identifizierers der leitungsvermittelten Sitzung durch eine Steuereinheit des Netzsteuerknotens umfasst.

9. Verfahren nach Anspruch 8, wobei das Sitzungssteuerprotokoll ein Sitzungseinleitungsprotokoll, SIP, ist.

10. Verfahren nach Anspruch 8, wobei das für das Sitzungssteuerprotokoll geeignete Format ein Meldungs/Sipfrag-Typ ist.

11. Verfahren nach Anspruch 8, das ferner das Empfangen der Sitzungssteuermeldung in eine Meldung eines anderen Typs eingebettet umfasst.

12. Verfahren nach Anspruch 8, wobei die spezielle Sitzungssteuermeldung eine Einladungsmeldung ist.

13. Computerprogramm mit einem Softwarecode, der bewirkt, dass ein Computer ein Verfahren nach einem der Ansprüche 8-12 ausführt, wenn das Computerprogramm auf dem Computer abgearbeitet wird.

## Revendications

1. Nœud de commande de réseau comprenant un expéditeur (2) et un destinataire (3) configuré pour exécuter une session à commutation de circuits, dans lequel l'expéditeur (1) et le destinataire (3) sont configurés pour également envoyer et recevoir des messages de commande de session conformément à un protocole de commande de session, et un contrôleur (1) configuré pour :
recevoir, depuis un équipement utilisateur, un message de commande de session spécifique, le message de commande de session comportant des informations pour établir une connexion commutée par paquets spécifique configurée pour prendre en charge des services de paquets spécifiques vers un nœud de réseau, dans lequel les informations sont codées dans un format adapté au protocole de commande de session, dans lequel le contrôleur (1) est configuré en outre pour obtenir les informations à partir du message de commande de session spécifique, et établir la connexion commutée par paquets spécifique avec le nœud de réseau en fonction des informations obtenues,
**caractérisé en ce que**
le nœud de commande de réseau est configuré pour utiliser la connexion commutée par paquets spécifique pour fournir des services concernant la session commutée par circuits, le message de commande de session spécifique est reçu durant la session commutée par circuits, et le contrôleur (1) est configuré pour lier la connexion commutée par paquets spécifique à la session commutée par circuits à l'aide d'un identifiant de session commutée par circuits.

2. Nœud de commande de réseau selon la revendication 1, dans lequel le protocole de commande de session est un protocole de lancement de session, SIP.

3. Nœud de commande de réseau selon la revendication 1, dans lequel le format adapté au protocole de commande de session est un type de message/sipfrag.

4. Nœud de commande de réseau selon la revendication 1, dans lequel le contrôleur (1) est configuré pour recevoir le message de commande de session intégré dans un message d'un autre type.

5. Nœud de commande de réseau selon la revendication 1, dans lequel le message de commande de session spécifique est un message d'invitation.

6. Nœud de commande de réseau selon la revendication 1, dans lequel le message de commande de session spécifique est un message de notification.

7. Nœud de commande de réseau selon la revendication 6, dans lequel le contrôleur (1) est configuré pour souscrire au message de notification.

8. Procédé d'établissement d'une connexion commutée par paquets, comprenant :
la réalisation, par un nœud de commande de réseau, d'une session commutée par circuits et l'envoi et la réception (S1) de messages de commande de session conformément à un protocole de commande de session,
et
la réception, par le nœud de commande de réseau, depuis un équipement utilisateur, d'un message de commande de session spécifique, le message de commande de session comportant des informations pour établir une connexion commutée par paquets spécifique configurée pour prendre en charge des services de paquets spécifiques vers un nœud de réseau, et dans lequel les informations sont codées dans un format adapté au protocole de commande de session,
l'obtention (S2) par le nœud de commande de réseau, des informations à partir du message de commande de session spécifique, et
l'établissement (S3), par le nœud de commande de réseau, de la connexion commutée par paquets spécifique avec le nœud de réseau en fonction des informations obtenues,
**caractérisé en ce que**
la connexion commutée par paquets spécifique est utilisée pour fournir des services concernant la session commutée par circuits, le message de commande de session spécifique est reçu durant la session commutée par circuits, et le procédé comprend la liaison, par un contrôleur du nœud de commande de réseau, de la connexion commutée par paquets spécifique à la session commutée par circuits à l'aide d'un identifiant de session commutée par circuits.

9. Procédé selon la revendication 8, dans lequel le protocole de commande de session est un protocole de lancement de session, SIP.

10. Procédé selon la revendication 8, dans lequel le format adapté au protocole de commande de session est un type de message/sipfrag.

11. Procédé selon la revendication 8, comprenant en outre la réception du message de commande de session intégré dans un message d'un autre type.

12. Procédé selon la revendication 8, dans lequel le message de commande de session spécifique est un message d'invitation.

13. Programme informatique comprenant un code logiciel qui amène un ordinateur à mettre en œuvre un procédé selon l'une quelconque des revendications 8 quand le programme informatique est exécuté sur l'ordinateur.
